# EUROPEAN PATENT APPLICATION

(11) **EP 3 907 860 A1**
(43) Date of publication of application: **10.11.2021**
(21) Application number: 20173216.1
(22) Date of filing: 06.05.2020
(51) Int. Cl.: H02K 1/27, H02K 7/18

(54) **PERMANENT MAGNET MACHINE**

(71) Applicant: Siemens Gamesa Renewable Energy A/S, 7330 Brande (DK)
(72) Inventor: Azar, Ziad, Sheffield, South Yorkshire S10 4ED (GB); Demissie, Edom, Sheffield, S3 7XB (GB); Groendahl, Erik, 8653 Them (DK); Jacobsen, Bo Nedergaard, 8300 Odder (DK); Reigner, Kevin Fabrice Franck, 7330 Brande (DK); Urda, Adriana Cristina, 2300 Copenhagen (DK)
(74) Representative: Aspacher, Karl-Georg

(57) **Abstract**

A permanent magnet electrical machine (10) includes a rotor body (130) and a plurality of permanent magnet modules (101) arranged around a rotational axis (Y) of the permanent magnet electrical machine (10), each permanent magnet module (101) comprising at least a permanent magnet (200) and a baseplate (301), the baseplate (301) including a base side (311) for attaching the permanent magnet module (101) to the rotor body (130) of the permanent magnet machine (10) and an opposite top side (312) for attaching the permanent magnet (200) to the baseplate (301). The rotor body (130) includes at least a cavity (210) housing a non-magnetic and/or non-conductive medium for creating a magnetic flux barrier between the rotor body (130) and the permanent magnet module (101). The baseplate may include a protrusion. The protrusion may be shaped as a dovetail. One or elastomeric inserts (350) may be provided between the baseplate (301) and the rotor body (130) .

## Description

### Field of invention

The present invention relates to the field of permanent magnet machines including permanent magnet modules.

### Art Background

A permanent-magnet electric machine, such as an electric generator installed in a wind turbine, typically comprises a rotor which rotates relative to a stator around a rotational axis. Stator and rotor are separated from each other by an airgap, circumferentially extended around the rotational axis.

In a permanent-magnet electric machine the rotor comprises a plurality of permanent magnets modules, each module including a baseplate and one or more permanent magnets attached to the baseplate. The baseplate is attached to the rotor body, so that, the baseplate is interposed between the respective magnet and the rotor body.

When mounting permanent magnet modules on the rotor, tolerances are needed to allow the module installation, leaving room for movement during operation. A certain degree of freedom is therefore present, which allows for the movement of each permanent magnet module along the tangential direction, i.e. along the direction of rotation of the rotor, and/or along the radial direction, i.e. along the direction perpendicular to the axis of rotation of the rotor. The tangential oscillations and consequent rattling of the permanent magnet modules in the tangential and/or the radial directions may be avoided by fixing them, for example by means of gluing or bolting to the rotor body. This would however add costs and complexity to the electric machine.

It is therefore desirable to provide efficient and cost-effective constructional features of a permanent magnet machine for effectively fixing the permanent magnet modules to the rotor body and avoiding the oscillations and rattling of the permanent magnet modules with respect to the rotor body.

### Summary of the Invention

This objective may be solved by the permanent electrical machine according to the independent claims. Advantageous embodiments of the present invention are described by the dependent claims.

According to the present invention a permanent magnet electrical machine including a rotor body and a plurality of permanent magnet modules arranged around a rotational axis of the permanent magnet electrical machine, each permanent magnet module comprising at least a permanent magnet and a baseplate, the baseplate including a base side for attaching the permanent magnet module to the rotor body of the permanent magnet machine and an opposite top side for attaching the permanent magnet to the baseplate. The rotor body includes at least a cavity housing a non-magnetic and/or non-conductive medium for creating a magnetic flux barrier between the rotor body and the permanent magnet module.

The cavity may be provided in the rotor body at any radial position comprised between a radial inner surface and a radial outer surface of the rotor body. In particular, the cavity may be adjacent to the baseplate and include an opening towards the baseplate. According to other possible embodiments of the invention, the cavity may be radially distanced from the baseplate.

According to possible embodiments of the invention, the non-magnetic and/or non-conductive medium may be air.

The present invention may be applied to the electrical generator of a wind turbine.

According to possible embodiments of the invention, the baseplate is removably attachable to the rotor body. Advantageously, the invention achieves an increase, with respect to the prior art, in the attraction between the baseplate and the rotor body. Consequently, the normal force between the baseplate and the rotor body is increased thereby increasing friction capacity, thus preventing the oscillation and rattling of the permanent magnet modules. The invention may be applied to shape and geometry of known permanent magnet modules, so that assembly process of sliding the magnet modules into the rotor body is not affected. According to other possible embodiments of the invention, the baseplate is permanently attached to the rotor body.

According to embodiments of the present invention, at least one elastomeric insert may be interposed between the baseplate and the rotor body. The elastomeric insert may be attached to the baseplate or to the rotor body or to both.

Advantageously, the elastomeric insert cooperates in keeping the permanent magnet module in place, further preventing the rattling of the permanent magnet modules.

According to further embodiments of the present invention, the baseplate includes a protrusion housed inside the cavity. The cavity and the protrusion may be shaped as dovetails. The elastomeric insert may be provided between the cavity and the protrusion.

According to embodiments of the present invention, the elastomeric insert may be provided on a non-torque side of the baseplate or on a torque side of the baseplate or on both the torque and the non-torque sides. With "torque side" it is meant a side of the baseplate in the direction of rotation of the rotor body. With "non-torque side" it is meant a side of the baseplate against the direction of rotation of the rotor body.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
Fig. 1 shows a schematic section of a wind turbine including embodiments of the present invention.
Fig. 2 shows a cross-sectional view of a permanent magnet machine including a rotor according to the present invention.
Fig. 3 shows a partial cross-sectional view of a first embodiment of the rotor of the permanent magnet machine of fig. 2.
Fig. 4 shows a partial cross-sectional view of a second embodiment of the rotor of the permanent magnet machine of fig. 2.
Fig. 5 shows a top view of a magnet module for a permanent magnet machine according to the present invention.
Fig. 6 shows a partial cross-sectional view of a third embodiment of the rotor of the permanent magnet machine of fig. 2.
Fig. 7 shows a partial cross-sectional view of a fourth embodiment of the rotor of the permanent magnet machine of fig. 2 .
Fig. 8 shows a bottom view of another magnet module for a permanent magnet machine according to the present invention.

### Detailed Description

The illustrations in the drawings are schematically. It is noted that in different figures, similar or identical elements are provided with the same reference signs.

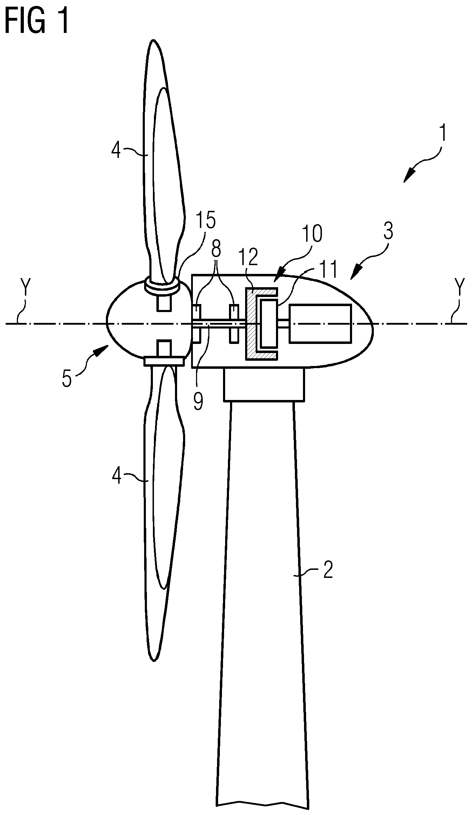

**Figure 1** shows a partial cross-sectional view of a wind turbine 1 including a permanent magnet machine 10, i.e. an electrical generator, which includes a permanent magnet module according to the invention. The permanent magnet machine 10 includes a stator 11 and a rotor 12. The rotor 12 is rotatable with respect to the stator 11 about a longitudinal axis of the permanent magnet machine 10. The terms axial, radial and circumferential in the following are to be intended with reference to the longitudinal axis Y of rotation of the permanent magnet machine 10. In the embodiment of Figure 1, the rotor 12 is radially external with respect the stator 11 and rotatable about the longitudinal axis Y. A circumferential air gap is provided between the stator 11 and the rotor 12. According to other possible embodiments of the present invention (not represented in the attached figures), the rotor 12 is radially internal with respect the stator 11 and rotatable about the longitudinal axis Y.
According to other possible embodiments of the present invention (not represented in the attached figures), the present invention may be applied to any type of permanent magnet electric machines, e.g. radial, axial, etc.
A plurality of permanent magnets modules (not visible in Figure 1) is attached to the rotor 12 by means of respective baseplates, as detailed in the following. According to other possible embodiments of the present invention (not represented in the attached figures), a plurality of permanent magnets modules may be attached to the stator of a permanent magnet machine.

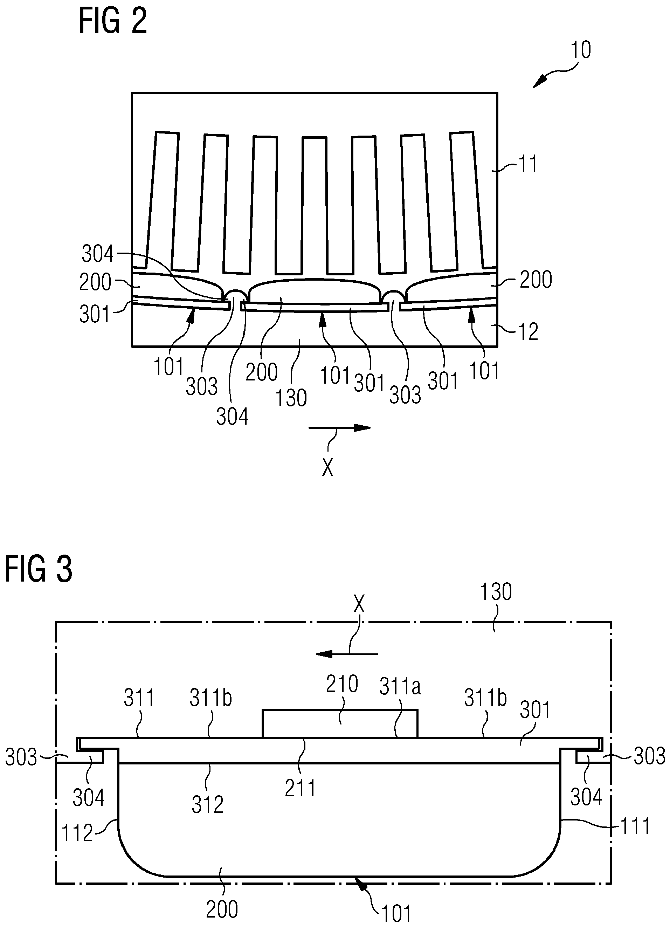

**Figure 2** shows a partial cross-sectional view of the permanent magnet machine 10 including a plurality of permanent magnet modules 101 attached to the rotor 12. The permanent magnet modules 101 are attached to a side of the rotor 12 which faces the stator 11. Each permanent magnet module 101 comprises a permanent magnet 200 and a baseplate 301. According to other embodiment of the present invention (not shown), each permanent magnet module 101 may comprise more than one permanent magnet 200 and more than one baseplate 301. Each baseplate may be permanently attached or removably attachable to the rotor body 130. Each of the permanent magnets 200 is attached to a rotor body 130 of the rotor 12 by means of the respective base plate 301. The permanent magnet modules 101 are distributed about the longitudinal axis Y in such a way that a plurality of tangential gaps is provided between the permanent magnet modules 101. Each tangential gap is tangentially provided between two tangentially adjacent permanent magnet modules 101. At each tangential gap a radial protrusion 303 is provided, which radially protrudes from an inner surface of the rotor body 130 towards the longitudinal axis Y. The radial protrusion 303 is T-shaped and comprises at its radial end two opposite circumferential fins 304. Each fin 304 radially interferes with a respective baseplate 301 for radially holding a respective permanent magnet module 101 in contact with the rotor body 130. Each permanent magnet module 101 may be further radially maintained in contact with the rotor body 130 by means of the radial magnetic force establishing between the respective permanent magnet 200 and the rotor body 130. The T-shaped protrusion 303 may have a flat or cylindrical surface.

**Figure 3** shows a partial cross-sectional view of the rotor 12 of figure 2, where the coupling between the rotor body 130 and a permanent magnet module 101 is shown. The baseplate 301 includes a base side 311 for attaching the permanent magnet module 101 to the rotor body 130 and a top side 312, radially opposite to the base side 311 for attaching the permanent magnet 200 to the baseplate 301, for example by gluing or other fixing means. The tangential direction X, i.e. the direction of rotation of the rotor 12 (towards left in the drawing of figure 3) defines a torque side 111 and a tangentially opposed non-torque side 112. With respect to direction of the tangential direction X, the torque side 111 is positioned in the direction of rotation of the rotor body 130 (right side in the drawing of figure 3) and the non-torque side 112 is against the direction of rotation of the rotor body (left side in the drawing of figure 3). In the tangential direction the base side 311 is larger than the top side 312, a step being provided therebetween at each of the torque side 111 and the non-torque side 112, where the circumferential fins 304 are active for radially holding the permanent magnet module 101 in contact with the rotor body 130. The rotor body 130 includes a cavity 210 interposed between the baseplate 301 and the rotational axis Y, in the view of figure 3, the cavity 210 has a rectangular shape and is provided between the torque side 111 and the non-torque side 112 at the same distance from the torque side 111 and from the non-torque side 112. According to other embodiments of the present invention, the cavity 210 may have another shape and be closer to the torque side 111 or to the non-torque side 112. The cavity 210 has a cavity opening 211 towards the baseplate 301. According to other embodiments of the invention (not shown), the cavity 210 is closed and radially distanced from the baseplate 301, i.e. a metal portion of the rotor body in interposed between the cavity 210 and the baseplate 301. The base side 311 comprises a first portion 311a in contact with the cavity opening 211 and a second portion 311b in direct contact with external surface of the rotor body 130. The first portion 311a and/or the second portion 311b may be flat or cylindrical in shape. The external surface of the rotor body 130, which is in contact with the second portion 311b may be consequently also flat or cylindrical in shape. The cavity 210 houses a non-magnetic and/or non-conductive medium for creating a magnetic flux barrier between the rotor body 130 and the permanent magnet module 101. The cavity 210 may house air. The cavity 210 with the non-magnetic and/or non-conductive medium constitutes a barrier for the magnetic flux path, which is consequently deviated towards the second portion 311b of the base side 311. The attraction between the baseplate 301 and the rotor body 130 is increased by reducing the extension of the second portion 311b and increasing the extension of the first portion 311a of the base side 311, i.e. by increasing the extension of the cavity 210. The second portion 311b may be reduced up to the limit at which magnetic saturation is reached. The radial magnetic attraction between the baseplate 301 and the rotor body 130 provides stability to the coupling between and reduce tangential and/or radial oscillations and rattling of the baseplate 301 with respect to the rotor body 130.

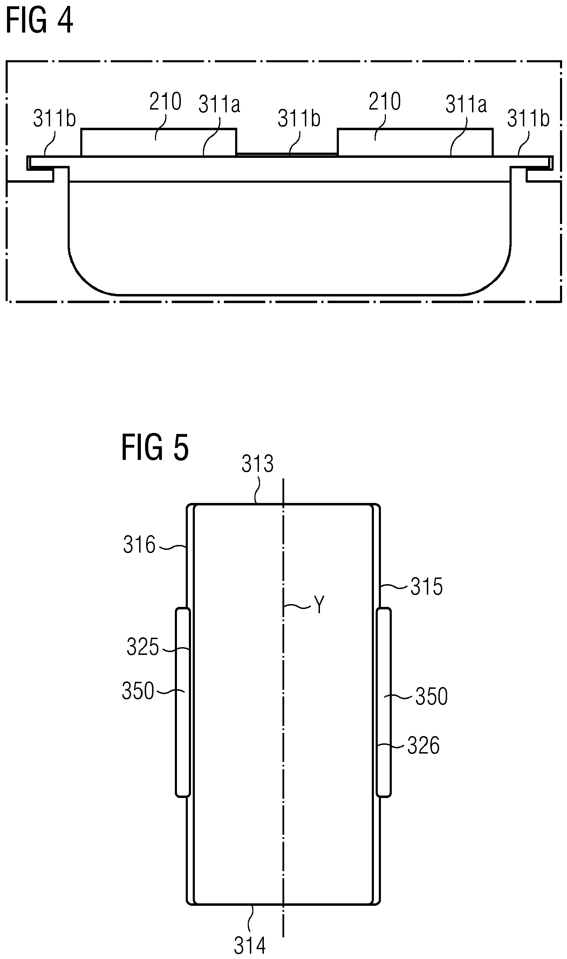

**Figure 4** shows a variant of the embodiment of figure 3, where, instead of one rectangular cavity 210, two rectangular cavities 210 are provided. According to other embodiments of the present invention (not shown), more than two cavities 210 may be present. A convenient number of cavities may be arranged for conveniently reducing the extension of the second portion 311b with respect to the first portion 311a.

**Figure 5** shows a top view of the baseplate 301 of figures 3 and 4. The view of figure 5 is radially oriented towards the longitudinal axis Y. The baseplate 301 axially extends along the longitudinal axis Y between two axial edges 313, 314. The baseplate 301 extends along the circumferential direction between two circumferential edges 315, 316, respectively provided at the torque side 111 and at the non-torque side 112. At the circumferential edges 315, 316 respective grooves 325, 326 are provided, where a respective elastomeric insert 350 is housed. When the baseplate 301 is coupled to the rotor body 130 the elastomeric insert 350 is interposed between the baseplate 301 and the rotor body 130, thus locking the base plate 301 against the rotor body 130 radially and tangentially. Each elastomeric insert 350 has an elongated shape parallel to the longitudinal axis Y. According to other embodiments of the present invention (not shown), may have other shapes. Each elastomeric insert 350 may insert for the entire axial extension of the two circumferential edges 315, 316 or only for a portion thereof. The elastomeric insert 350 may lock the magnet module 101 radially and/or tangentially with respect to the rotor body 130. According to other embodiments of the present invention (not shown), only one groove and only one elastomeric insert 350 is provided at only one of the two circumferential edges 315, 316.

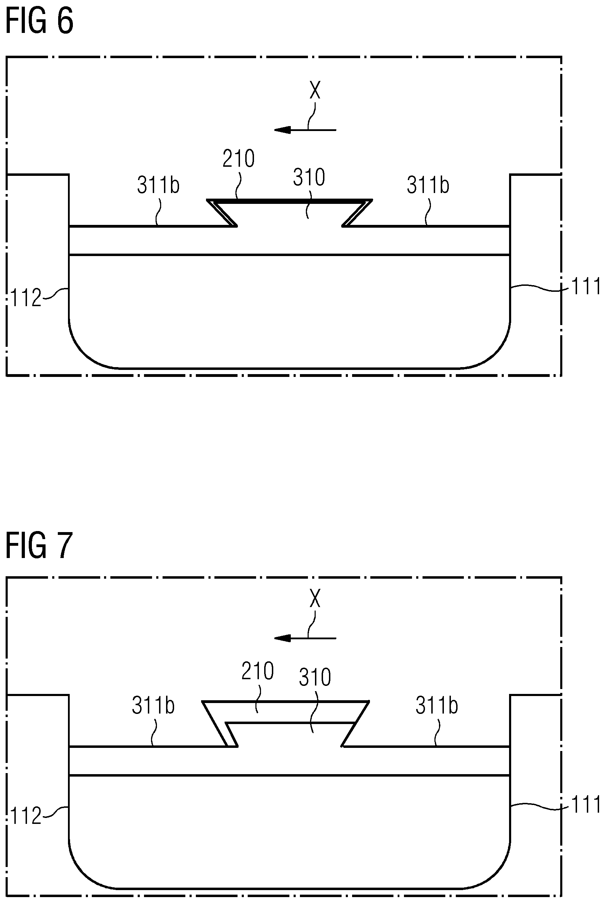

**Figure 6** shows a variant of the embodiments of figure 3 and 4, where, instead of a rectangular cavity 210, a dovetail-shaped cavity 210 is provided on the rotor body 130 for creating a magnetic flux barrier between the rotor body 130 and the permanent magnet module 101. The baseplate 301 includes a protrusion 310 housed inside the cavity 210. The protrusion 310 is shaped as a dovetail, in order that a shape coupling between the protrusion 310 and the cavity 210 is achieved. In the embodiment of figure 6 the coupling between the protrusion 310 and the cavity 210 is symmetric, the non-magnetic and/or non-conductive medium being interposed between the protrusion 310 and the cavity 210. An elastomeric insert 350 may be interposed between the protrusion 310 and the cavity 210. The elastomeric insert 350 may be provided at a torque side of the cavity 210 or at a non-torque side of the cavity 210 or at both torque and non-torque side. The elastomeric insert 350 may be optionally radially interposed between the cavity 210 and the protrusion 310. In the embodiment of figure 6, the T-shaped protrusion 303 on the rotor body 130 is not present, because the tangential and radial confinement of the permanent magnet module 101 with respect to the rotor body 130 is defined by the coupling between the cavity 210 and the protrusion 310.

**Figure 7** shows a variant of the embodiments of figure 6, where, instead of a symmetric cavity 210, a non-symmetric cavity is used, i.e. a cavity 210 which contacts the protrusion 310 at one side, which may be the torque side (figure 7) or the non-torque side.

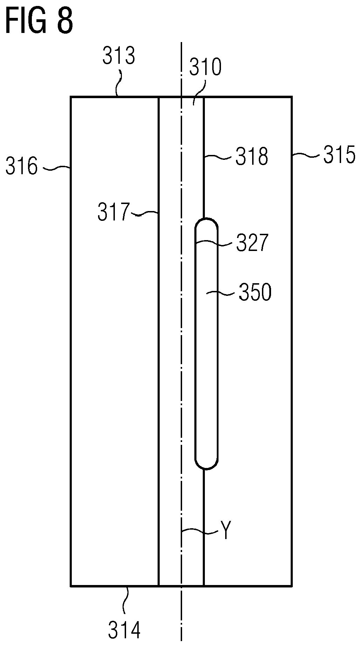

**Figure 8** shows a bottom view of the baseplate 301 of figures 6 and 7. The view of figure 8 is radially oriented towards the longitudinal axis Y. Similarly to the embodiment of figure 5, the baseplate 301 axially extends along the longitudinal axis Y between two axial edges 313, 314 and circumferentially extends between two circumferential edges 315, 316. The protrusion 310 circumferentially extends between two protrusion edges 317, 318. At one protrusion edges 318 a groove 327 is provided, where an elastomeric insert 350 is housed. According to another embodiment of the present invention (not shown), the groove 327 and the elastomeric insert 350 are provided on the other protrusion edge 317. According to another embodiment of the present invention (not shown), at both protrusion edges 317, 318 a respective groove 327 is provided, where a respective elastomeric insert 350 is housed.

According to other embodiments of the present invention (not shown), the elastomeric insert 350 may be provided on the rotor body 130, on a surface in contact with the baseplate 301. According to other embodiments of the present invention (not shown), elastomeric inserts 350 may be provided on the baseplate 301 and on the rotor body 130, on a surface in contact with the baseplate 301.

## Claims

1. A permanent magnet electrical machine (10) including a rotor body (130) and a plurality of permanent magnet modules (101) arranged around a rotational axis (Y) of the permanent magnet electrical machine (10), each permanent magnet module (101) comprising at least a permanent magnet (200) and a baseplate (301), the baseplate (301) including a base side (311) for attaching the permanent magnet module (101) to the rotor body (130) of the permanent magnet machine (10) and an opposite top side (312) for attaching the permanent magnet (200) to the baseplate (301),
wherein the rotor body (130) includes at least a cavity (210) housing a non-magnetic and/or non-conductive medium for creating a magnetic flux barrier between the rotor body (130) and the permanent magnet module (101).

2. The permanent magnet electrical machine (10) according to claim 1, wherein the non-magnetic and/or non-conductive medium is air.

3. The permanent magnet electrical machine (10) according to claim 1 or 2, wherein at least one elastomeric insert (350) is provided between the baseplate (301) and the rotor body (130) for limiting tangential and/or radial oscillations of the permanent magnet module (101) with respect to the rotor body (130).

4. The permanent magnet electrical machine (10) according to claim 3, wherein the at least one elastomeric insert (350) is provided on the baseplate (301) and/or the rotor body (130) .

5. The permanent magnet electrical machine (10) according to any of the previous clams, wherein the cavity (210) includes a cavity opening (211) towards the baseplate (301).

6. The permanent magnet electrical machine (10) according to any of the previous claims, wherein the baseplate (301) includes a protrusion (310) housed inside the cavity (210).

7. The permanent magnet electrical machine (10) according to claim 6, wherein the cavity (210) and the protrusion (310) are shaped as dovetails.

8. The permanent magnet electrical machine (10) according to any of the previous claims, wherein the base side (311) of the baseplate (301) is flat or cylindrical.

9. The permanent magnet electrical machine (10) according to any of the previous claims 3 to 8, wherein the elastomeric insert (350) is provided on a non-torque side of the baseplate (301) and/or on a torque side of the baseplate (301)

10. The permanent magnet electrical machine (10) according to claim 9, wherein the at least one elastomeric insert (350) is extended along the rotational axis (Y).

11. The permanent magnet electrical machine (10) according to any of the previous clams, wherein the baseplate (301) is permanently attached or removably attachable to the rotor body (130).

12. A wind turbine (1) including an electrical generator (10) according to any of the previous claims.
